# EUROPEAN PATENT APPLICATION

(11) **EP 0 987 699 A1**
(43) Date of publication of application: **22.03.2000**
(21) Application number: 99302912.3
(22) Date of filing: 15.04.1999
(51) Int. Cl.: G11B 7/24, G11B 7/12, G11B 7/007

(54) **Near-field optical storage medium and optical data storage system therefor**

(30) Priority: 18.09.1998 US 100778 P; 18.09.1998 KR 9838738; 12.02.1999 KR 9905043
(71) Applicant: SAMSUNG ELECTRONICS CO., LTD., Suwon-City, Kyungki-do (KR)
(72) Inventor: Lee, Chul-Woo, Pundang-gu, Sungnam-city, Kyungki-do (KR); Cho, Kun-Ho, Suwon-city, Kyungki-do (KR); Shin, Dong-Ho, Seodaemun-gu, Seoul (KR); Seo, Joong-Eon, Uiwang-city, Kyungki-d. (KR); Jung, Seung-Tae, Sungnam-city, Kyungki-do (KR); Park, Byeong-Ho, Paldal-gu, Suwon-city, Kyingki-do (KR); Hwang, In-Ho, Sungnam-city, Kyungki-do (KR); Ro, Myong-Do, Suwon-city, Kyungki-do (KR); Kim, Yoon-Gi, Seocho-gu, Seoul (KR)
(74) Representative: Chugg, David John

(57) **Abstract**

An optical data storage system writes or reads information with respect to an optical storage medium using an optical pickup including a solid-state immersion optical system or solid-state immersion lens for generating the near-field. The optical storage medium (68) includes a recording layer which is put on one surface opposing the other surface of an optical transmissive layer (686) opposing the solid-state immersion optical system or solid-state immersion lens. The thickness of the optical transmissive layer (686) is larger than one wavelength of light used. The interval between the surfaces of the solid-state immersion lens or solid-state immersion optical system and the optical transmissive layer is smaller than one wavelength of the used light. Thus, the light beam reflected from the inside of an air gap and the inside of the storage medium between the air gap and the recording layer does not function as noise with respect to the light reflected from the recording layer. Also, since the thickness of a protective layer or a substrate which is an external surface of the optical storage medium can be thickened, information can be written or read with respect to the optical storage medium having dust and damage.

## Description

The present invention relates to a near-field optical storage medium and an optical data storage system having a focusing optical system, and more particularly, to an optical storage medium which is used together with an optical pickup having a near-field focusing optical system such as a solid-state immersion optical system or a solid-state immersion lens, and a near-field optical data storage system for performing writing and/or reading of information with respect to the optical storage medium.

In an optical data storage system, an optical pickup having a solid-state immersion optical system or solid-state immersion lens performs writing and/or reading of information with respect to the optical data storage system, using a near-field formed between the solid-state immersion optical system or solid-state immersion lens and the optical data storage system.

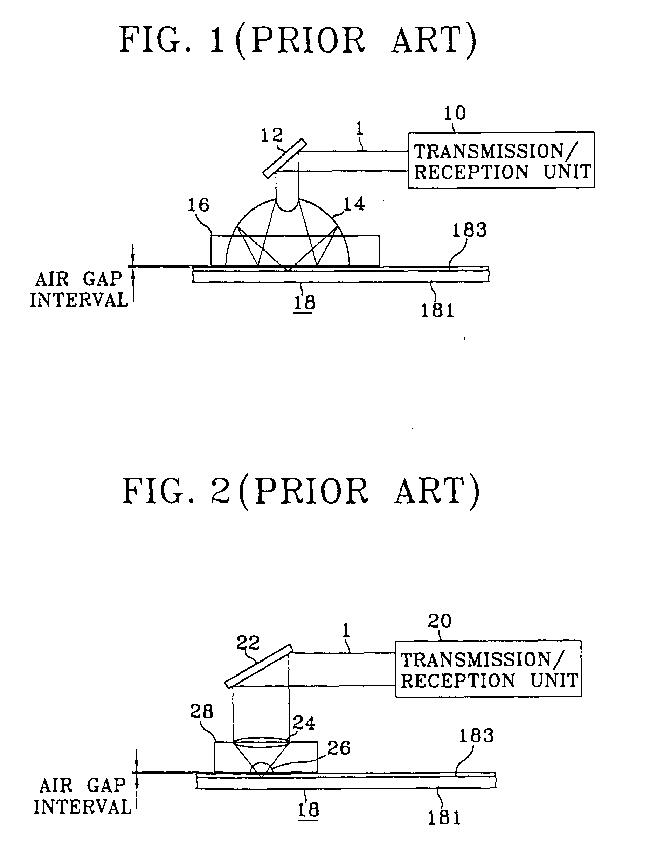

Figures 1 and 2 show an existing optical disc used as an optical data storage system, in which Figure 1 shows that an existing optical disc is used together with the optical data storage system having a catadioptric solid-state immersion optical system, and Figure 2 shows that an existing optical disc is used together with an optical data storage system having a refractive type solid-state immersion lens.

In Figure 1, a light beam 1 emitted from a light transmission and reception portion 10 is reflected by a reflective mirror 12 and incident to a catadioptric solid-state immersion optical system 14. A slider 16 supporting the solid-state immersion optical system 14 floats the solid-state immersion optical system aerodynamically through an air bearing generated by a relative movement between an optical data storage medium 18 such as an optical disc and the slider 16. As a result, an air gap is formed between the solid-state immersion optical system 14 and a protective layer 183 of the optical data storage medium 18. An interval of the air gap, that is, a distance between the opposing surfaces of the solid-state immersion optical system 14 and the optical data storage medium 18, is maintained so as to be for example within one wavelength of the light used. It is preferable that this gap be much smaller than one wavelength of the used light. The catadioptric solid-state immersion optical system 14 refracts and reflects the light beam 1 incident from the reflective mirror 12, and forms a beam spot focused on its surface opposing the optical data storage medium 18. The beam spot forms a near field in the air gap between the solid-state immersion optical system 14 and the surface of the optical storage medium 18.

The optical data storage system shown in Figure 2 includes a focusing objective lens 24 and a refractive solid-state immersion lens 26, rather than the catadioptic solid-state immersion optical system 14 shown in Figure 1. A light transmission and reception portion 20 emits a light beam 1 having an optimized diameter for the objective lens 24. A reflective mirror 22 reflects the light beam 1 emitted from the light transmission and reception portion 20 toward the objective lens 24. The objective lens 24 focuses the light beam 1 incident from the reflective mirror 22 on the solid-state immersion lens 26. The beam spot focused on the solid-state immersion lens 26 forms a near field between the surface opposing the optical storage medium 18 and a protective layer 183 in the optical storage medium 18. The objective lens 24 and the solid-state immersion lens 26 are supported by a slider 28. The slider 28 floats the solid-state immersion lens 26 aerodynamically and forms an air gap having an interval within one wavelength of light used between the solid-state immersion lens 26 and the optical storage medium 18, like the slider 16 shown in Figure 1.

In the optical data storage system shown in Figure 1 or 2, a beam spot is formed in a near field generating portion being a predetermined position on the surface of the solid-state immersion optical system 14 or the solid-state immersion lens 26 which opposes the optical storage medium 18. In general, the system shown in Figure 1 or 2 uses a finite beam spot corresponding to a numerical aperture (NA) of at least one for writing or reading information with respect to the optical storage medium 18. In the case that used light has a wavelength λ of 650nm, a light beam which forms a beam spot on the near field generating portion passes an air gap of an interval of approximately 110nm and a protective layer 183 of 70-90nm thick, and transferred to a recording layer of the optical storage medium 18. The recording layer is disposed between the protective layer 183 of the optical storage medium 18 and a substrate 181. The light beam reflected from the recording layer transmits through the protective layer 183 and the air gap and is transferred to the solid-state immersion optical system or the solid-state immersion lens 26.

Generally, according to the refraction and total reflection laws, the light contributed to a large numerical aperture is totally reflected from the emission surface of the solid-state immersion optical system 14 or the solid-state immersion lens 26, that is, the near field generating portion being an optical transmitting surface adjacent to the storage medium 18. Therefore, in the case that the interval of the air gap is larger than the wavelength λ of the light used, the optical storage medium 18 is positioned in the portion beyond the near field. Thus, the light contributed to the large numerical aperture does not contribute to formation of the beam spot on the optical storage medium 18. In other words, the numerical aperture of the light beam contributed to the formation of the beam spot on the optical storage medium 18 becomes smaller than "1", while passing through the air gap. As a result, a spot size of the light beam focused on the storage medium 18 with the light travelling through the air gap having an interval larger than the wavelength of the used light, becomes larger than the beam spot size formed on the near field generating portion of the solid-state immersion optical system 14 or the solid-state immersion lens 26. However, in the case that an interval of the air gap is sufficienfly smaller than one wavelength of the used light, preferably λ/4, the spot size of the light beam incident to the optical storage medium 18 is close to the size of the beam spot formed in the near field generating portion. Therefore, under this condition, the optical data storage system shown in Figure 1 or 2 can write or read information at high density with respect to the recording layer of the optical storage medium 18, using the solid-state immersion optical system 14 or the solid-state immersion lens 26.

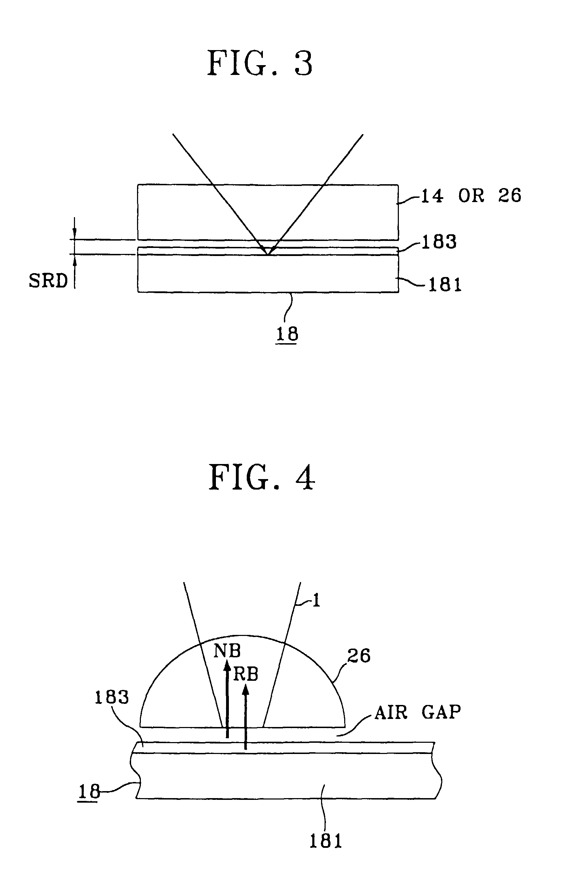

Figure 3 shows the near field generating portion between the surface of the solid-state immersion optical system 14 or the solid-state immersion lens 26 and the protective layer 183 of the optical storage medium 18. The interval SRD from the surface of the solid-state immersion optical system 14 or the solid-state immersion lens 26 opposing the optical storage medium 18 to the protective layer 183, more accurately, to the recording layer becomes smaller than one wavelength of the used light, and the recording layer in the storage medium 18 is positioned within the distance providing a near field effect.

An example of an existing optical disc is disclosed in U. S. patent No. 5,470,627. In the case that the above existing optical disc is for example a magnetooptical disc, the disc includes a reflective layer, a first dielectric layer, a recording layer, and a second dielectric layer which are disposed on a conventional substrate in sequence. The reflective layer is made of metal such as aluminium of 500-1000Å thick. The first dielectric layer is made of aluminum nitride or silicon nitride of 150-400Å thick. The recording layer is made of rare-earth transition-metal alloy such as TbFeCo of 150-500Å thick. Finally, the protective layer is made of silicon nitride Si₃N₄ of 400-800Å thick.

However, in the case that the above-described existing optical disc is used, the optical data storage system has two problems as follows. These problems take place identically in both the data storage system including the solid-state immersion optical system 14 and the data storage system including the solid-state immersion lens 26. Therefore, for convenience of explanation, these problems will be described in connection with the existing optical disc and the solid-state immersion lens 26.

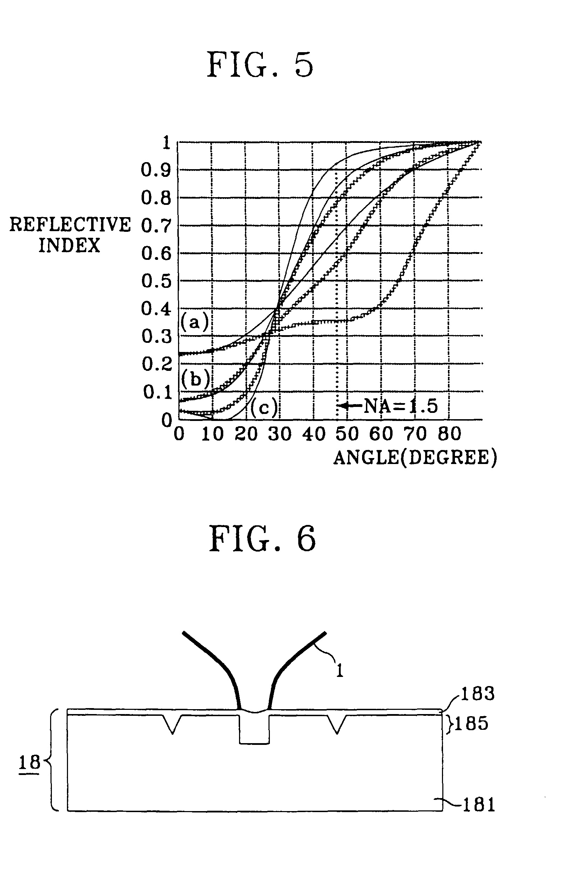

First, there is the problem that the light beam reflected from the recording layer on the existing optical disc having the above structure contains noise due to interference which will be described with reference to Figures 4 and 5. Figure 4 shows a solid-state immersion lens 26 having a refractive index of 1.8. In Figure 4, "air gap reflective light (NB)" illustrates the light beam totally reflected from the near field generating portion of the solid-state immersion lens 26 and the air gap between the solid-state immersion lens 26 and the optical storage medium 18, and "recording layer reflective light (RB)" illustrates the light beam reflected from the recording layer in the optical storage medium 18. In the case that the solid-state immersion lens 26 has a refractive index of 1.8, the total reflective angle of 56.3 degree at the solid-state immersion lens 26 corresponds to the numerical aperture of 0.83. Figure 5 shows angle-reflectance characteristics of the solid-state immersion optical system 14 or the solid-state immersion lens 26 with respect to three air gap intervals. In Figure 5, curves (a) show angle-reflectance characteristics with respect to the air gap interval of 50nm, curves (b) show angle-reflectance characteristics with respect to the air gap interval of 100nm, and curves (c) show angle-reflectance characteristics with respect to the air gap interval of 150nm. Among the curves (a) through (c), the curves denoted as "++" show angle-reflectance characteristics with respect to the p-polarized light beam, and the curves denoted as "-" (solid line) show angle-reflectance characteristics with respect to the s-polarized light beam. The angle denoted at the horizontal axis indicates an incident angle possessed by the light beam proceeding to the air gap from the solid-state immersion lens 26. For example, in the case that an interval of the air gap existing between the optical storage medium 18 and the solid-state immersion lens 26 becomes larger than the wavelength of the used light, the portion of the light beam having an angle larger than the total reflection angle of 56.3 degree, particularly the portion of the light beam contributed to a higher numerical aperture, for example, the numerical aperture of 1.2 or more among the light beam proceeding from the solid-state immersion lens 26 to the storage medium 18, does not transmit the air gap, but is totally reflected in the near field generating portion or in the inside of the air gap. As can be seen from Figure 5 showing a reflectance with respect to the numerical aperture of 1.5, the air gap reflective light NB has a relatively higher reflectance. Also, since the air gap and the recording layer are very close to each other, an interference occurs between the air gap reflective light (NB) and the recording layer reflective light (RB). Finally, the air gap reflective light (NB) functions as noise with respect to the recording layer reflective light (RB).

Now, the problem caused by the optical storage medium 18 which is made at high density will be described with reference to Figure 6. In the case that the optical storage medium 18 is fabricated into a high density optical storage medium, grooves or pits of 100-150nm wide are formed on a substrate 181 for recording information thereon. A reflective layer or a recording layer on which information is actually recorded are in turn put on the grooves or pits, through a coating process. In addition, a protective layer 183 of 150-200nm thick is formed on the recording layer. In Figure 6, an unevenness structure 185 formed as the grooves or pits on the substrate 181 is shown in the form of a wedge or well. Since the depth of the recording layer coated by the protective layer 183 is larger than the width of the grooves or pits, the light beam 1 incident from the solid-state immersion optical system 14 or the solid-state immersion lens 26 to the optical storage medium 18 does not reach the grooves or pits, more accurately the recording layer, but is reflected in the vicinity of the inner side on the surface of the protective layer 183. As a result, the optical data storage system cannot perform writing and/or reading of information with respect to the high density optical storage medium 18.

With a view to solve or reduce the above problems, it is an aim of embodiments of the present invention to provide an optical storage medium including an optical transmissive layer having a desired thickness between a solid-state immersion optical system or solid-state immersion lens and a recording layer formed on the optical storage medium, in such a manner that the above-described light reflected from an air gap does not function as noise with respect to light reflected from the recording layer, in order to be used together with an optical pickup having the solid-state innnersion optical system or solid-state immersion lens for writing or reading information.

It is another aim of embodiments of the present invention to provide an optical data storage system including an optical pickup for recording information on an optical storage medium or reading information therefrom.

According to a first aspect, there is provided an optical storage medium for storing information thereon, which is used together with an optical pickup having a focusing optical system for generating a near field, the optical storage medium comprising: an optical transmissive layer formed on an upper part of said medium so as to be most adjacent to optical system and said focusing having a thickness larger than one wavelength of light used by said optical pickup; and a recording layer formed on a surface of said optical transmissive layer so as to be relatively further away from said focusing optical system than said optical transmissive layer.

Preferably, said optical transmissive layer has a thickness of approximately several micrometers to several hundred micrometers.

Preferably, said optical transmissive layer is a protective layer made of an acrylrate-based resin.

Preferably, said optical transmissive layer comprises a substrate which has an unevenness structure formed on it, so that a pre-formatted structure for storing information thereon is provided.

Preferably, unevenness structure comprises a plurality of grooves or pits which are engraved toward the surface of said other side opposing said focusing optical system.

Preferably, said plurality of grooves or pits each have a width of approximately 100-150nm and said recording layer has a thickness of approximately 150-400nm.

According to a second aspect of teh present invention, there is provided an optical data storage system for writing or reading information with respect to an optical storage medium using an optical pickup, the optical data storage system comprising: the optical pickup including a focusing lens generating a near field; and an optical transmissive layer having a thickness larger than one wavelength of light used and the optical storage medium including a recording layer which is put on one surface opposing the other surface of said optical transmissive layer opposing said focusing lens, wherein an interval between the surfaces of each one side of said focusing lens and said optical transmissive layer is smaller than one wavelength of light used.

Preferably, when said focusing lens is slanted with respect to said optical storage medium, an interval between the portion of said focusing lens farthest from the surface of said optical storage medium and the surface of said optical storage medium is maintained within one wavelength of the used light.

Preferably, said optical transmissive layer has a thickness of approximately several micrometers to several hundred micrometers.

Preferably said optical transmissive layer is a substrate having an unevenness structure formed on the surface of said other side, so that a pre-formatted structure for storing information thereon is provided.

Preferably, said unevenness structure comprises a plurality of grooves or pits which are engraved toward the surface of said other side opposing said focusing lens.

Preferably, said plurality of grooves or pits each have a width of approximately 100-150nm and said recording layer has a thickness of approximately 150-400nm.

Preferably, an interval between the surface of said one side of said optical storage medium and said focusing lens is less than 1/4 of the wavelength of light used.

Preferably, said optical pickup comprises a focusing optical system having a numerical aperture of one or more.

Said focusing optical system may be a catadioptric solid-state immersion optical system.

Said focusing optical system may be a refractive type solid- state immersion lens.

The optical data storage system may further comprise: a light transmission and reception portion for emitting a light beam and detecting the incident light beam; a slider for floating said focusing optical system from the surface of said one side of said optical storage medium aerodynamically; and an optical path changing means for transferring the light beam emitted from said light transmission and reception portion to said focusing optical system, and transferring the light beam incident from said focusing optical system to said light transmission and reception portion.

According to a further aspect, there is provided an optical data storage system for writing or reading information with respect to an optical storage medium using optical pickups, the optical data storage system comprising: the optical pickups including first and second optical pickups including a focusing optical system generating a near field; and the optical storage medium including a single optical storage medium including a first optical transmissive layer having one surface opposing said first optical pickup, a second optical transmissive layer having one surface opposing said second optical pickup, and first and second recording layers which are respectively put on the other surface of said first optical transmissive layer and the other surface of said second optical transmissive layer, wherein said first and second optical transmissive layers have a thickness larger than one wavelength of light used and the distance between the opposing one surfaces of said focusing optical system and said optical transmissive layer becomes smaller than the one wavelength of the used light beam.

For a better understanding of the invention, and to show how embodiments of the same may be carried into effect, reference will now be made, by way of example, to the accompanying diagrammatic drawings, in which:
Fig. 1 shows an existing optical data storage system including an existing optical disc and a catadioptric solid-state immersion lens therefor;
Figure 2 shows an existing optical data storage system including an existing optical disc and a refractive type solid- state immersion lens therefor;
Figure 3 shows a near field generating portion in the optical data storage system shown in Figure 1 or 2;
Figure 4 is a view for explaining air gap reflective light and recording layer reflective light which are generated in the Figure 2 system;
Figure 5 is a graphical view showing angle-reflectance characteristics according to air gap changes in the optical data storage system shown in Figure 1 or 2;
Figure 6 is a view for explaining the case that an unevenness structure formed on the substrate of the optical storage medium is not detected by an optical pickup in the optical data storage system shown in Figure 1 or 2;
Figure 7 shows an optical data storage system according to a first embodiment of the present invention, which is used together with an optical data storage system including a catadioptric solid-state immersion lens;
Figure 8 shows an optical data storage system according to a second embodiment of the present invention, which is used together with an optical data storage system including a transmissive solid-state immersion lens;
Figure 9 is a view for explaining the case that an unevenness structure formed on the substrate of the optical disc is detected by an optical pickup in the optical data storage system shown in Figure 8;
Figure 10 shows an optical data storage system according to a third embodiment of the present invention;
Figure 11 shows a hierarchical structure of the optical disc according to the first embodiment of the present invention; and
Figure 12 is a graphical view showing the change of the relative movement stiction force with the texturing depth in the optical disc shown in Figure 11.

Preferred embodiments of the present invention will be described with reference to the accompanying drawings, in which elements having the same reference numerals perform the same functions.

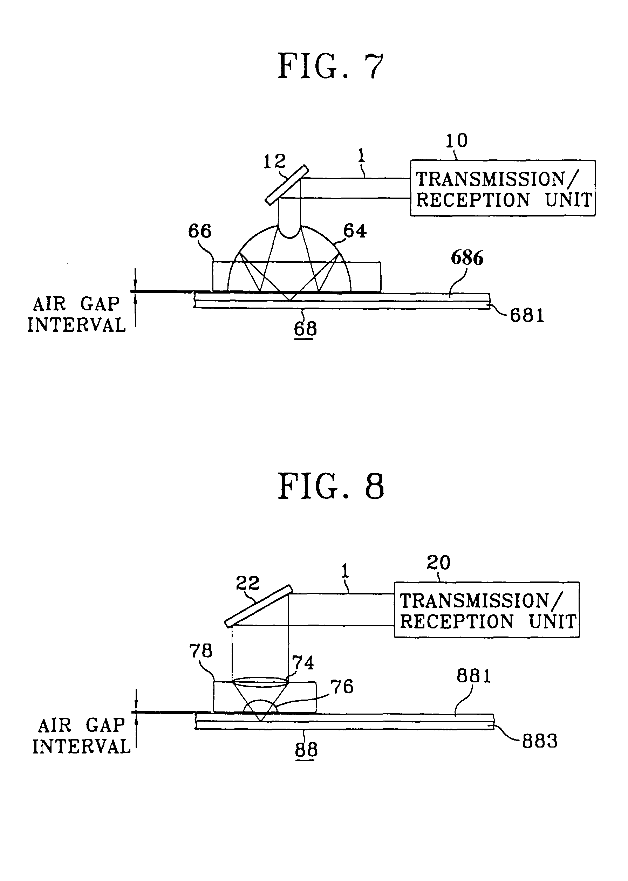

Referring to Figure 7, an optical data storage system according to a first embodiment of the present invention includes an optical pickup having a light transmission and reception portion 10, a reflective mirror 12, a catadioptric solid-state immersion optical system 64, and a slider 66, and an optical storage medium 68. Since the elements shown in Figure 7 perform the same optical functions as those having the same reference numerals shown in Figure 1, the detailed description thereof will be omitted.

The optical storage medium 68 includes a substrate 681, an optically transparent protective layer 686, and a recording layer disposed between the substrate 681 and the protective layer 686, which is generally in the form of a disc. In the case of an overwritable optical storage medium 68, the recording layer is formed by coating an optically sensitive material on the surface of the substrate 681. The optical storage medium 68 is fabricated in such a manner that the light beam emitted from the catadioptric solid-state immersion optical system 64 is transmitted through the protective layer 686 having an optical transmissive characteristic and forms a minimized beam spot on the recording layer. In contrast to the conventional type storage medium 18 which has a relatively thin protective layer 183, the optical storage medium 68 has a protective layer 686 which is relatively thicker such that the thickness is greater than the wavelength of light used by the optical pickup. An air gap exists between the protective layer 686 and the solid-state immersion optical system 64. Therefore, the surface of the solid-state immersion optical system 64 positioned toward the reflective mirror 12 has an aspherical surface forming a minimized beam spot on the recording layer of the optical storage medium 68, taking the thickness and refractive index of the protective layer 686 into consideration.

Alternatively, the catadioptric solid-state immersion optical system 64 is fabricated in the shape and material similar to those of the solid-state immersion optical system 14 of Figure 1. As described above, the shape is slightly changed in consideration of the thickness of the substrate being greater than one wavelength of the light used.

The light beam 1 proceeding from the reflective mirror 12 to the solid-state immersion lens 64 is refracted and reflected in the solid-state immersion lens 64 and forms a beam spot in the center of the surface opposing the protective layer 686 of the storage medium 68, as shown in Figure 7. The slider 66 floats the solid-state immersion lens 64 aerodynamically on an air cushion from the surface of the storage medium 68 by the relative movement between the rotating storage medium 68 and the slider 66, and forms an air bearing between the opposing surfaces of the storage medium 68 and the slider 66. Here, the interval of the air gap existing between the surfaces of the solid-state immersion lens 64 and the protective layer 686 is maintained so as to be less than the wavelength of the light used, that is the light beam 1 emitted from the light transmission and reception portion 10. In the optimal case, if the air gap interval is maintained into less than 1/4 wavelength, an interference phenomenon is reduced to thereby obtain an excellent signal to noise ratio. The light beam incident to the storage medium 68 passes through the optically transparent protective layer 686 and reaches the recording layer. Thus, in the case where the optical storage medium 68 is fabricated in the form of a high density optical storage medium, that is, the optical data storage system 68 has grooves or pits of 100-150nm wide and a protective layer 686 of 150-200nm thick, the depth from the surface of the storage medium 68 positioned toward the air gap to the grooves or pits becomes larger than the width of the grooves or pits. Thus, the Figure 7 system can write or read information with respect to the high density optical storage medium.

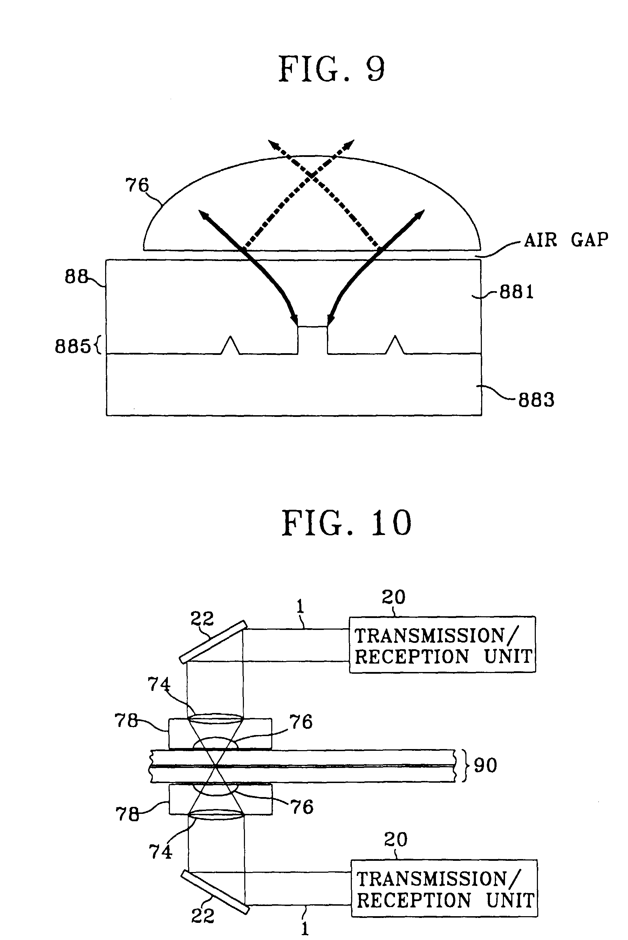

Figure 8 shows an optical data storage system according to a second embodiment of the present invention. The Figure 8 system includes an objective lens 74, a refractive solid-state immersion lens 76 and a slider 78, instead of the solid-state immersion optical system 64 and the slider 66 shown in Figure 7. Figure 9 is an enlarged view of the optical storage medium 88 and the solid-state immersion lens 76 shown in Figure 8.

The objective lens 74 focuses the light beam incident from the reflective mirror 22 on the refractive solid-state immersion lens 76. In this embodiment, differently from the above-described storage medium 68, the optical storage medium 88 includes a substrate 881 having an optical transmissive characteristic on one surface opposing the solid-state immersion lens 76, and a protective layer 883 on the other surface far from the solid-state immersion lens 76. Grooves or pits for recording information are formed on the substrate 881 of the optical storage medium 88. An unevenness structure 885 formed by the grooves or pits formed on the optical transmissive substrate 881 is illustrated in the form of a wedge or well concave toward the substrate 881 in Figure 9.

The solid-state immersion lens 76 forms an optimized beam spot on the recording layer of the optical storage medium 88, in the center of the surface of the solid-state immersion lens 76 opposing the storage medium 88, using the light beam incident from the objective lens 74. In this case, the objective lens 74 and the solid-state immersion lens 76 form a beam spot providing a numerical aperture of at least one on the above-described surface of the solid-state immersion lens 76. The slider 78 floats the solid-state immersion lens 76 from the surface of the rotating storage medium 88 and maintains an interval of the air gap between the surfaces of the solid-state immersion lens 76 and the substrate 881 into 1/4 or less of the wavelength of the light beam emitted from the light transmission and reception portion 20.

In the case that the interval of the air gap is 1/4 or more of the wavelength of the used light, the light beam providing the numerical aperture of one or more is totally reflected from the air gap when the light beam forming the beam spot on the surface of the solid-state immersion lens 76 opposing the storage medium 88 passes through the air gap. Thus, only the light beam providing the numerical aperture of less than one is transferred to the optical storage medium 88. The spot size of the light beam reaching the storage medium 88 becomes relatively large. However, when the interval of the air gap becomes less than 1/4 of the wavelength of the used light, the light beam of the numerical aperture of one or more is transferred to the storage medium 88, and the size of the beam spot becomes small. Also, since the unevenness structure 885 in which the recording layer is formed is far from the air gap compared with the existing optical storage medium, the recording layer reflective light is protected from the interference due to the air gap reflective light. Thus, the optical data storage system shown in Figure 8 can write or read information with respect to the optical storage medium 88 with an excellent signal to noise ratio as well. In Figure 9, the solid arrow line denotes "recording layer reflective light" reflected from the recording layer of the storage medium 88 and the dotted arrow line denotes "air gap reflective light" reflected from the surface of the solid-state immersion lens 76, the air gap and the substrate 881.

Figure 10 shows an optical data storage system according to a third embodiment of the present invention. The system shown in Figure 10 includes a double-sided optical storage medium 90. The optical storage medium 90 is fabricated in a manner that substrates 681 of two sheets of the optical storage media 68 shown in Figure 7 are adjacent to each other or contact each other. Otherwise, the storage medium 90 is fabricated in a manner that protective layers 883 of two sheets of the optical storage media 88 shown in Figure 8 are adjacent to each other or contact each other, or only a protective layer 883 remains after two sheets of the optical storage media have been incorporated into one. The Figure 10 system includes a pair of the light transmission and reception portions 20, the reflective mirrors 22, the objective lenses 74, the solid-state immersion lenses 76 and the sliders 78, for the optical storage medium 90. Since the operation of the Figure 10 system can be appreciated by one skilled in the art well through the above-described embodiments, the detailed description thereof will be omitted.

Since fabrication of the optical data storage system for writing and/or reading information with respect to the optical storage medium 90 shown in Figure 10 using the system shown in Figure 7 or 8 is also apparent to those who have an ordinary skill in the art, the detailed description thereof will be omitted.

In the above-described first embodiment, the thickness of the protective layer 686 may become infinitely thick in principle, but it is sufficient that the air gap between the solid-state immersion optical system 64 and the protective layer 686 is smaller than one wavelength of the light used. However, considering the practical thickness and the numerical aperture determining the size of the light spot, the thickness of the protective layer 686 may be enough if it is several micrometers to several hundred micrometers thick. As an example, the thickness of the substrate of a digital versatile disc (DVD) is 0.6µm, that is, 600µm.

Also, although the optical axis of the solid-state immersion optical system 64 or the solid-state immersion lens 76 is not perpendicular to the surface of the optical storage medium 68 or 88 but is slanted thereto, if the distance between the portion of the solid-state immersion optical system 64 or solid-state immersion lens 76 farthest from the surface of the optical storage medium 68 or 88, and the surface of the optical storage medium 68 or 88 is within the wavelength of the used light, the light beam reflected from the inside of the air gap or the inside of the storage medium between the air gap and the recording layer does not function as noise with respect to the light beam reflected from the recording layer. In particular, if the size of the light beam focused by the solid-state immersion optical system 64 or solid-state immersion lens 76 maintains 0.1-0.2mm at the time of passing through the surface of the optical storage medium 68 or 88, an excellent recording or reproduction characteristic can be obtained with respect to the optical storage medium 68 or 88 having dust or damage on the surface thereof.

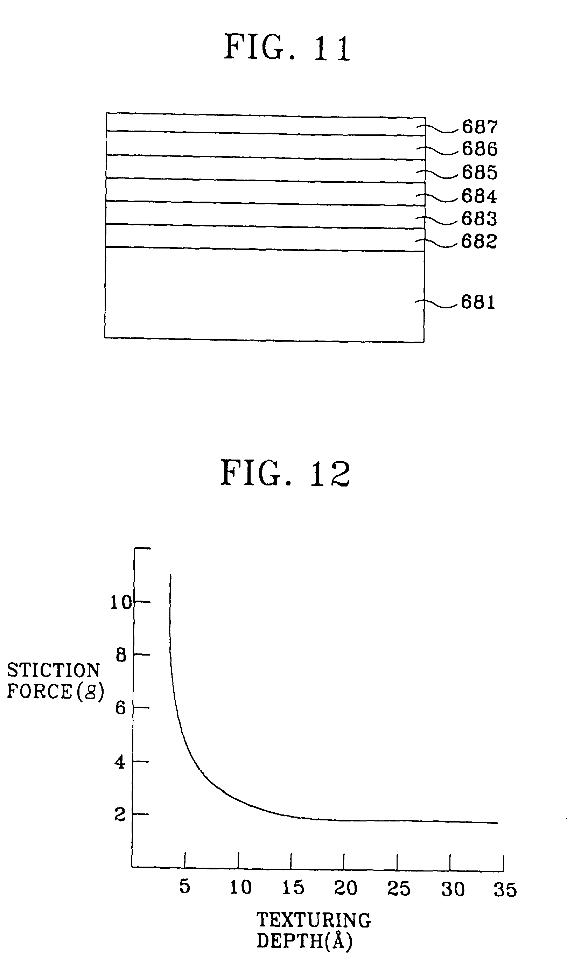

Figure 11 shows a hierarchical structure of the optical disc which embodies the optical storage medium 68 shown in Figure 7. The optical disc shown in Figure 11 is a high density magnetooptical disc having a recording capacity of 20GByte or more, which includes a substrate 681, and a reflective layer 682, a first dielectric layer 683, a recording layer 684, a second dielectric layer 685, a protective layer 686 and a lubricant film 687 which are put on the substrate 681 in turn. The substrate 681 is made of glass, polycarbonate, PMMA, and an acrylrate-based resin, and has an unevenness structure of a track pitch of 0.3-0.4µm and a groove depth of 50-800Å. The reflective layer 682 is made of one of aluminium (Al), nickle (Ni), copper (Cu), platinum (Pt), silver (Ag) and gold (Au), and has a thickness of 500-2000Å. The first and second dielectric layers 683 and 585 are made of Si₃N₄, ZnS-SiO₂, etc. The first dielectric layer 683 has a thickness of 100-400Å and the second dielectric layer 684 has a thickness of 300-800Å. The recording layer 684 is made of TbFeCo, NdTbFeCo, TbFe, etc., in order to perform a magnetooptical recording, and has a thickness of 150-400Å. The protective layer 686 can be made of either an optically transparent inorganic material or an organic material. In this embodiment, the protective layer 686 is made by spin-coating acrylrate-based resin, and has a thickness of 5-100µm. The surface of the protective layer 686 is texturing-processed in order to reduce a stiction called a static friction. The interval of a bump by the texturing process is 20-60µm and a texturing depth (or bump height) is 5-50Å. The lubricating film 687 formed on the protective layer 686 has a thickness of 1-3nm and is a lubricant which does not react chemically with the protective layer 686 and made of PFPE (Perfluoro-Polyether). The Fomblin Z Dol or Fomblin 2001 which is used in a hard disc is used as a lubricant. The Galden SV is used as a solvent mixed with the lubricant.

Referring to Figure 12, in the case that texturing is not processed on the surface of the optical disc, a stiction occurs. However, in the case that texturing having a depth of 5Å or more is performed, the stiction is reduced.

In the present invention, the solid- state immersion optical system or solid-state immersion lens has been used. However, it is apparent to those having an ordinary skill in the art that a general focusing optical system may be used instead of the solid-state immersion optical system or solid-state immersion lens, if the air gap between the emitting surface of the optical system and the protective layer of the storage medium is smaller than one wavelength of the used light and the thickness of the protective layer is thicker than the wavelength of the used light.

In the above-described embodiments, the reflective mirror 12 or 22 plays a role of transferring the light beam emitted from the light transmission and reception portion 10 or 20 to the solid-state immersion lens and transferring the light beam incident from the solid-state immersion lens to the light transmission and reception portion. Thus, various optical elements which can change an optical path like a prism can be used instead of the reflective mirror.

As described above, the optical data storage system according to the present invention uses an optical storage medium the thickness of which transmissive layer put between the emitting surface of a focusing optical system such as a solid-state immersion optical system or solid-state immersion lens and a recording layer is larger than the wavelength of light used. Thus, in the present invention, the light beam reflected from the inside of the air gap or the inside of the storage medium between the air gap and the recording layer does not function as noise with respect to the light beam reflected from the recording layer. Also, since the present invention can thicken the protective layer or the substrate which becomes the external surface of the optical storage medium, information can be written or read accurately with respect to the optical storage medium having dust or damage.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical storage medium (68, 88) for storing information thereon, which is used together with an optical pickup (10, 20) having a focusing optical system for generating a near field, the optical storage medium (68, 88) comprising:
an optical transmissive layer (686, 881) formed on an upper part of said medium so as to be most adjacent to said focusing optical system and having a thickness larger than one wavelength of light used by said optical pickup; and
a recording layer formed on a surface of said optical transmissive layer so as to be relatively further away from said focusing optical system than said optical transmissive layer.

2. The optical storage medium according to claim 1, wherein said optical transmissive layer (686, 881) has a thickness of approximately several micrometers to several hundred micrometers.

3. The optical storage medium according to claim 1 or 2, wherein said optical transmissive layer (686, 881) is a protective layer made of an acrylrate-based resin.

4. The optical storage medium according to claim 1, 2, or 3, wherein said optical transmissive layer (686, 881) comprises a substrate which has an unevenness structure (885) formed on it, so that a pre-formatted structure for storing information thereon is provided.

5. The optical storage medium according to claim 4, wherein said unevenness structure (885) comprises a plurality of grooves or pits which are engraved toward the surface of said other side opposing said focusing optical system.

6. The optical storage medium according to claim 5, wherein said plurality of grooves or pits each have a width of approximately 100-150nm and said recording layer has a thickness of approximately 150-400nm.

7. An optical data storage system for writing or reading information with respect to an optical storage medium (68, 88, 90) using an optical pickup, the optical data storage system comprising:
the optical pickup including a focusing lens generating a near field; and
an optical transmissive layer (686, 881) having a thickness larger than one wavelength of light used and the optical storage medium (68, 88, 90) including a recording layer which is put on one surface opposing the other surface of said optical transmissive layer opposing said focusing lens,
wherein an interval between the surfaces of each one side of said focusing lens and said optical transmissive layer is smaller than one wavelength of light used.

8. The optical data storage system according to claim 7, wherein when said focusing lens is slanted with respect to said optical storage medium, an interval between the portion of said focusing lens farthest from the surface of said optical storage medium and the surface of said optical storage medium is maintained within one wavelength of the used light.

9. The optical data storage system according to claim 7 or 8, wherein said optical transmissive layer has a thickness of approximately several micrometers to several hundred micrometers.

10. The optical data storage system according to claim 9, wherein said optical transmissive layer is a substrate having an unevenness structure formed on the surface of said other side, so that a pre-formatted structure for storing information thereon is provided.

11. The optical data storage system according to claim 10, wherein said unevenness structure comprises a plurality of grooves or pits which are engraved toward the surface of said other side opposing said focusing lens.

12. The optical data storage system according to claim 11, wherein said plurality of grooves or pits each have a width of approximately 100-150nm and said recording layer has a thickness of approximately 150-400nm.

13. The optical data storage system according to claim 7, 8, 9, 10, 11 or 12, wherein an interval between the surface of said one side of said optical storage medium and said focusing lens is less than 1/4 of the wavelength of light used.

14. The optical data storage system according to any of claims 7 to 13, wherein said optical pickup comprises a focusing optical system having a numerical aperture of one or more.

15. The optical data storage system according to claim 14, wherein said focusing optical system is a catadioptric solid-state immersion optical system.

16. The optical data storage system according to claim 14, wherein said focusing optical system is a refractive type solid- state immersion lens.

17. The optical data storage system according to claim 14, further comprising:
a light transmission and reception portion for emitting a light beam and detecting the incident light beam;
a slider for floating said focusing optical system from the surface of said one side of said optical storage medium aerodynamically; and
an optical path changing means for transferring the light beam emitted from said light transmission and reception portion to said focusing optical system, and transferring the light beam incident from said focusing optical system to said light transmission and reception portion.

18. An optical data storage system for writing or reading information with respect to an optical storage medium using optical pickups, the optical data storage system comprising:
the optical pickups including first and second optical pickups including a focusing optical system generating a near field; and
the optical storage medium including a single optical storage medium including a first optical transmissive layer having one surface opposing said first optical pickup, a second optical transmissive layer having one surface opposing said second optical pickup, and first and second recording layers which are respectively put on the other surface of said first optical transmissive layer and the other surface of said second optical transmissive layer, wherein said first and second optical transmissive layers have a thickness larger than one wavelength of light used and the distance between the opposing one surfaces of said focusing optical system and said optical transmissive layer becomes smaller than the one wavelength of the used light beam.
